Europäisches Patentamt

European Patent Office

Office européen des brevets

(11) Numéro de publication: **0 359 629**
A1

# DEMANDE DE BREVET EUROPEEN

(21) Numéro de dépôt: **89402433.0**

(22) Date de dépôt: **07.09.89**

(51) Int. Cl.⁵: **B 01 D 53/22**
C 01 B 3/50, C 10 K 1/00

(30) Priorité: **12.09.88 FR 8811883**

(43) Date de publication de la demande:
**21.03.90 Bulletin 90/12**

(84) Etats contractants désignés:
**AT BE CH DE ES FR GB GR IT LI LU NL SE**

(71) Demandeur: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur: **Gauthier, Pierre**
**95 bis, bd Jean Jaurès**
**F-94260 Fresnes (FR)**

**Monereau, Christian**
**159, rue de Charonne**
**F-75011 Paris (FR)**

(74) Mandataire: **Sadones Laurent, Renée et al**
**L'AIR LIQUIDE SOCIETE ANONYME POUR L'ETUDE ET L'EXPLOITATION DES PROCEDES GEORGES CLAUDE**
**/75 quai d'Orsay**
**F-75321 Paris Cédex 07 (FR)**

(54) **Procédé et installation de production simultanée d'hydrogène et de monoxyde de carbone.**

(57) Une unité (1) de réformage d'hydrocarbures produit un gaz contenant $H_2$ et CO, avec un ratio $H_2$/CO excédentaire par rapport aux besoins. L'hydrogène excédentaire est séparé par perméation (en 4) en amont du traitement cryogénique (5).

FIG.1

EP 0 359 629 A1

Bundesdruckerei Berlin

# Description

## PROCEDE ET INSTALLATION DE PRODUCTION SIMULTANEE D'HYDROGENE ET DE MONOXYDE DE CARBONE

La présente invention est relative à un procédé de production simultanée d'hydrogène et de monoxyde de carbone avec un ratio $H_2/CO$ prédéterminé, du type dans lequel on réalise un gaz de synthèse, tel qu'un gaz de réformage d'hydrocarbures, contenant de l'hydrogène et du monoxyde de carbone.

Les gaz obtenus par réformage d'hydrocarbures contiennent de l'hydrogène et du monoxyde de carbone, mais avec un ratio $H_2/CO$ qui n'est généralement pas adapté aux besoins de production.

L'invention a pour but de combler cette lacune de façon économique. A cet effet, elle a pour objet un procédé du type précité, caractérisé en ce qu'on réalise le gaz de synthèse avec un ratio $H_2/CO$ excédentaire, et on ajuste ce ratio en éliminant l'hydrogène en excès par perméation.

Dans un mode de mise en oeuvre avantageux de ce procédé, on ne soumet qu'une fraction du gaz de synthèse à la perméation.

L'invention a également pour objet une installation destinée à la mise en oeuvre de ce procédé. Cette installation, du type comprenant une unité de production d'un gaz de synthèse, tel qu'un gaz de réformage d'hydrocarbures, contenant de l'hydrogène et du monoxyde de carbone, est caractérisée en ce qu'elle comprend, en aval de ladite unité, un perméateur destiné à l'élimination de l'hydrogène en excès.

Quelques exemples de mise en oeuvre de l'invention vont maintenant être décrits en regard des dessins annexés, sur lesquels :

- les figures 1 et 2 représentent schématiquement deux variantes de l'installation suivant l'invention : et
- la figure 3 représente une variante du cadre III de la figure 2.

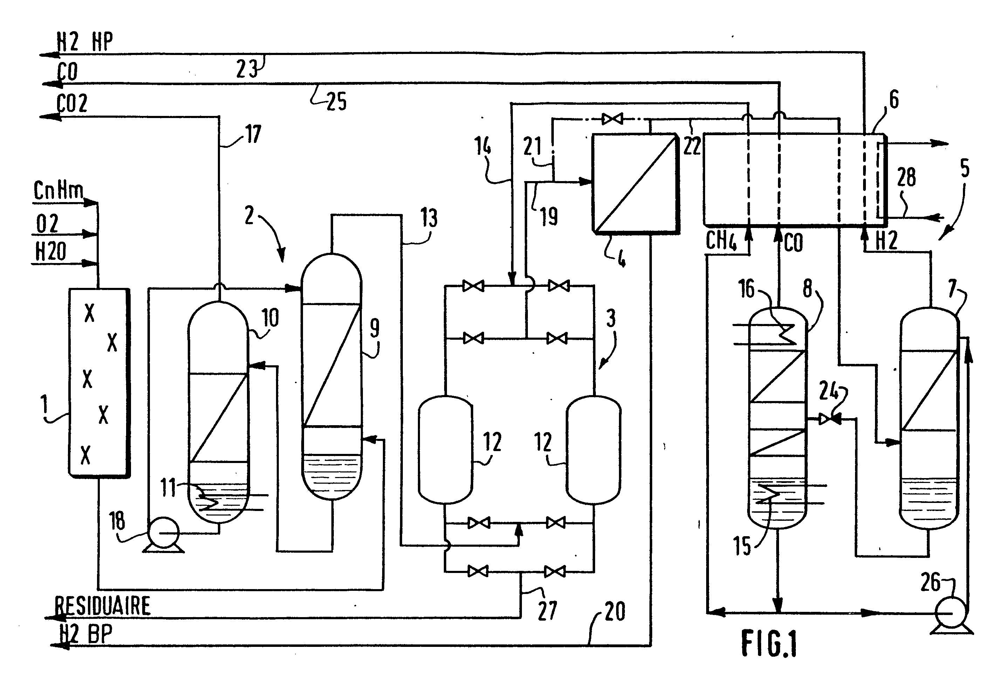

L'installation représentée à la figure 1 est destinée à récupérer de l'hydrogène et du monoxyde de carbone contenus dans le gaz produit par une unité de réformage d'hydrocarbures 1. Cette dernière fait réagir des hydrocarbures $C_n H_m$ avec de l'oxygène et de l'eau et produit sous une pression de l'ordre de 30 à 50 bars un gaz de synthèse constitué d'hydrogène, de monoxyde de carbone, de méthane, d'anhydride carbonique et d'eau. Les proportions peuvent être par exemple de l'ordre de 50 à 80 % d'hydrogène, 20 à 50% de CO, 0,1 à 10% de méthane et 1 à 30% de $CO_2$, et le ratio hydrogène/monoxyde de carbone de ce gaz est excédentaire par rapport aux besoins de production.

L'installation comprend essentiellement un appareil 2 de décarbonatation primaire par lavage aux amines, un appareil 3 de décarbonatation secondaire- dessication par adsorption, un perméateur 4, et une unité de séparation cryogénique 5 comprenant elle-même un échangeur de chaleur indirect 6 à circulation à contre-courant des produits mis en relation d'échange thermique, une colonne 7 de lavage au méthane et une colonne 8 de distillation.

L'appareil 2 comprend une colonne de lavage 9 et une colonne 10 de régénération des amines par distillation, cette dernière étant chauffée en cuve vers 150°C par un serpentin 11.

L'appareil 3 comprend deux bouteilles d'adsorption 12 à fonctionnement alterné, l'une étant en phase d'adsorption pendant que l'autre est en phase de régénération ou désorption à contre-cou rant. L'adsorbant contenu dans les bouteilles 12 est par exemple du tamis moléculaire. Cet appareil 3 est alimenté par une conduite 13 véhiculant le mélange à traiter, et par une conduite 14 véhiculant le gaz de régénération. Il comprend un ensemble de vannes approprié pour le fonctionnement qui sera décrit plus loin.

Le perméateur 4 est adapté pour séparer l'hydrogène des autres constituants du mélange qui est introduit, par exemple grâce à un faisceau de fibres creuses constituées par une membrane à perméabilité sélective. Un exmeple de membrane convenant pour cette application est basé sur une technologie polyaramide développée par DU PONT de NEMOURS selon le brevet Re 30351 (reissue de US 3 899 309). D'autres exemples sont décrits dans les brevets US 4 180 553 et US 4 230 463.

La colonne de distillation 8 comporte en cuve un rebouilleur 15 dont la température est de l'ordre de -140 à -150°C et en tête un condenseur 16 à -180°C environ.

En fonctionnement, le gaz de synthèse est envoyé en cuve de la colonne 9, à une température comprise entre 30 et 100°C environ, et est lavé par un courant liquide d'amines, puis, largement décarbonaté, parvient à la conduite 13. Le liquide recueilli en cuve de la colonne 9 est envoyé en tête de la colonne 10 et est décarbonaté par distillation. Ainsi, un courant de $CO_2$ gazeux est soutiré en tête de la colonne 10 par une conduite 17, et un courant liquide d'amines régénérées est soutiré en cuve de cette colonne et renvoyé par une pompe 18 en tête de la colonne 9.

Le gaz traité est ensuite complètement décarbonaté et déshydraté par adsorption dans l'appareil 3, puis envoyé via une conduite 19 dans l'espace haute pression du perméateur 4. Celui-ci produit un perméat constitué essentiellement d'hydrogène sous une basse pression de quelques bars et évacué par une conduite 20, et un reliquat constitué essentiellement du méthane et du monoxyde de carbone ainsi que du reste de l'hydrogène contenu dans le gaz de départ.

Les paramètres du procédé, ainsi éventuellement qu'un by-pass 21 à débit réglable reliant directement la conduite 19 à la conduite 22 de sortie haute pression du perméateur, permettent d'ajuster le débit du perméat pour obtenir le ratio $H_2/CO$ haute pression désiré dans la conduite 22.

Le gaz décarbonaté et déshydraté, à ratio $H_2/CO$ ainsi ajusté, véhiculé par la conduite 22 et refroidi vers -180°C par l'échangeur 6, est envoyé à la base de la colonne 7. Dans celle-ci, l'hydrogène est séparé par lavage au méthane, réchauffé à température ambiante dans l'échangeur 6 et évacué par une conduite 23.

Le liquide de cuve de la colonne 7 est détendu à environ 3 bars dans une vanne de détente 24 et envoyé à mi-hauteur de la colonne 8, qui réalise la séparation du CO et du méthane. Le CO, soutiré sous forme gazeuse en tête de cette colonne, est réchauffé à température ambiante dans l'échangeur 6 et évacué par une conduite 25. Le méthane, soutiré sous forme liquide en cuve de colonne, est pour partie envoyé par une pompe 26 en tête de la colonne 7, après refroidissement à -180°C dans un échangeur de chaleur non réprésenté. Le reste du méthane liquide est vaporisé et réchauffé à température ambiante dans l'échangeur 6 puis véhiculé par la conduite 14 jusqu'à la bouteille d'adsorption 12 à régénérer, l'effluent constituant un résiduaire de l'installation et étant évacué au réseau "fuel-gas" par une conduite 27.

Un appoint de frigories est apporté à l'échangeur 6 par un dispositif frigorifique approprié 28.

La présence du perméateur 4 permet non seulement d'obtenir le ratio $H_2/CO$ désiré en haute pression , mais également de faire traiter par la partie cryogénique 5 de l'installation un débit de gaz réduit.

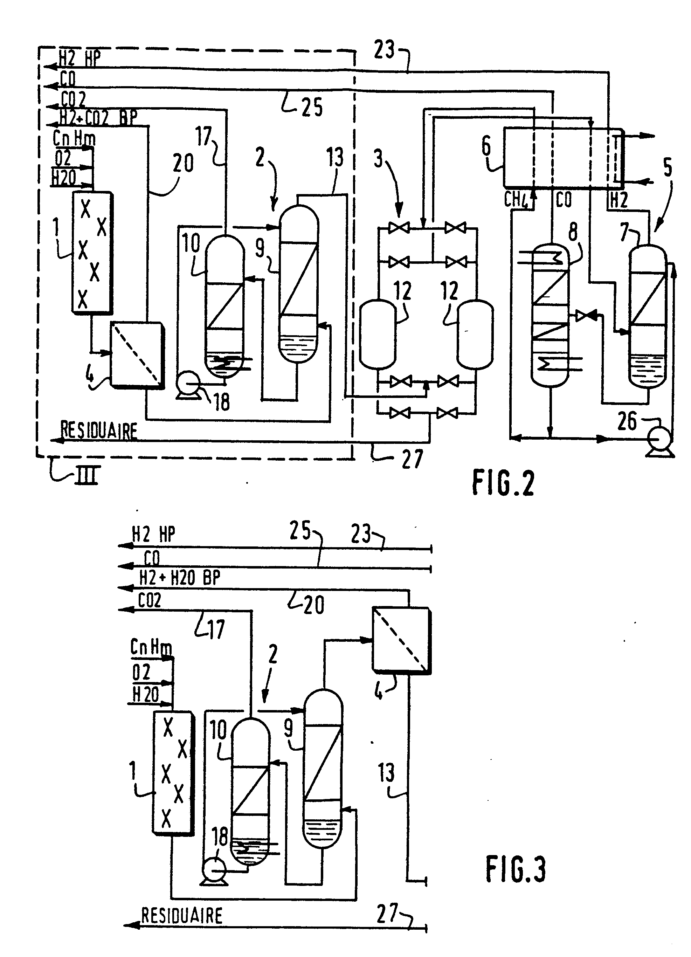

L'installation de la figure 2 ne diffère de celle de la figure 1 que par le fait que le perméateur 4 est monté en amont de l'appareil 2 et reçoit directement le gaz de synthèse en provenance de l'unité 1. Comme les menbranes de séparation d'hydrogène sont généralement relativement perméables au $CO_2$, c'est un mélange $H_2/CO_2$ qui constitue le perméat évacué par la conduite 20, et le résidu de la perméation est envoyé à l'appareil 3. Cette variante permet de réduire en outre les coûts relatifs aux étapes de décarbonatation primaire et de dacarbonatation secondaire-dessication.

En variante encore, comme représenté sur la figure 3, le perméateur peut être monté entre les appareils 2 et 3. Il reçoit alors le mélange ayant subi la décarbonatation primaire et délivre via la conduite 20 un mélange hydrogène-eau constituant le perméat (les membranes de séparation d'hydrogène étant généralement relativement perméables à l'eau), ainsi qu'un résidu haute pression envoyé à l'appareil 3 par la conduite 13. Par rapport au cas de la figure 1, cette variante permet en outre de réduire l'investissement relatif à l'appareil d'adsorption 3.

## Revendications

1. Procédé de production simultanée d'hydrogène et de monoxyde de carbone avec un ratio $H_2/CO$ prédéterminé, du type dans lequel on réalise (en 1) un gaz de synthèse, tel qu'un gaz de réformage d'hydrocarbures, contenant de l'hydrogène et du monoxyde de carbone, caractérisé en ce qu'on réalise le gaz de synthèse avec un ratio $H_2/CO$ excédentaire, et on ajuste ce ratio en éliminant l'hydrogène en excès par perméation (en 4).

2. Procédé suivant la revendication 1 dans lequel on soumet le gaz de synthèse à une décarbonatation et à une dessication (en 2 et 3), puis à une séparation cryogénique des constituants restants (en 5), caracatérisé en ce qu'on effectue la perméation en amont de la séparation cryogénique.

3. Procédé suivant l'une des revendications 1 et 2, caractérisé en ce qu on ne soumet qu'une fraction du gaz de synthèse à la perméation.

4. Installation de production simultanée d'hydrogène et de monoxyde de carbone avec un ratio $H_2/CO$ prédéterminé, du type comprenant une unité (1) de production d'un gaz de synthèse, tel qu'un gaz de réformage d'hydrocarbures, contenant de l'hydrogène et du monoxyde de carbone, caractérisée en ce qu'elle comprend, en aval de ladite unité (1), un perméateur (4) destiné à l'élimination de l'hydrogène en excès.

5. Installation suivant la revendication 4, comprenant, en aval de ladite unité (1), des moyens (2, 3) de décarbonatation et de dessication du gaz de synthèse, et une unité de séparation cryogénique (5) comprenant un échangeur de chaleur (6) destiné à refroidir le gaz sortant des moyens de décarbonata tion et de dessication, caractérisée en ce que le perméateur (4) est dispose en amont de l'échangeur de chaleur (6).

6. Installation suivant l'une des revendications 4 et 5, caractérisée en ce que le perméateur (4) est équipé d'un by-pass (21) à débit réglable.

FIG.1

H2 HP
CO
CO2

CnHm
O2
H2O

RESIDUAIRE
H2 BP

H2
CO
CH4

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-1 767 751 (VVB ENERGIEVERSORGUNG) <br> * Revendication 1 * <br> --- | 1 | B 01 D 53/22 <br> C 01 B 3/50 <br> C 10 K 1/00 |
| X | EP-A-0 021 756 (MONSANTO) <br> * Page 1, ligne 1 - page 2, ligne 2; revendication 1 * <br> --- | 1 | |
| X | EP-A-0 213 525 (AIR PRODUCTS) <br> * Page 2, ligne 20 - page 3, ligne 8 * | 1 | |
| A | * Figure 2 * <br> --- | 2-6 | |
| A | US-A-3 251 652 (W. PFEFFERLE) <br> * Figures; colonne 8, ligne 24 - colonne 9, ligne 10 * <br> --- | 1-6 | |
| A | EP-A-0 100 923 (LINDE) <br> * Figure 3 * <br> --- | 1-6 | |
| A | EP-A-0 186 843 (AIR PRODUCTS) <br> * Figure 6 * <br> --- | 1-6 | |
| A | US-A-4 732 583 (B. DELONG) <br> * Figures * <br> ----- | 1-6 | |

DOMAINES TECHNIQUES RECHERCHES (Int. Cl.5)

B 01 D
C 01 B
F 25 J
C 10 K

Le présent rapport a été établi pour toutes les revendications

| Lieu de la recherche | Date d'achèvement de la recherche | Examinateur |
|---|---|---|
| LA HAYE | 03-11-1989 | KANOLDT W.W. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
......................................................................................
& : membre de la même famille, document correspondant

EPO FORM 1503 03.82 (P0402)